# EUROPÄISCHE PATENTSCHRIFT

(11) **EP 0 641 588 B1**
(45) Veröffentlichungstag und Bekanntmachung des Hinweises auf die Patenterteilung: **19.03.1997**
(21) Anmeldenummer: 94111434.0
(22) Anmeldetag: 22.07.1994
(51) Int. Cl.: B01D 39/08, D04H 13/00, B32B 5/06

(54) **Filtermittel**
Filtering material
Matière filtrante

(30) Priorität: 04.08.1993 DE 9311628 U
(43) Veröffentlichungstag der Anmeldung: 08.03.1995
(73) Patentinhaber: Thomas Josef Heimbach GmbH & Co., D-52353 Düren (DE)
(72) Erfinder: Boeckenbrink, Myriam, D-52379 Langerwehe (DE); Breuer, Hans-Peter, Dr., D-41747 Viersen (DE); Dürbaum, Hubert, D-52355 Düren (DE); Ebener, Bernd, D-52457 Aldenhoven (DE); Oehmichen-Roering, Peter, D-52353 Düren (DE)
(74) Vertreter: Albrecht, Ralf, Dipl.-Ing.

(56) Entgegenhaltungen:
- EP-A- 0 248 182
- EP-A- 0 269 462
- EP-A- 0 391 660
- EP-A- 0 410 733
- FR-A- 1 572 324
- PATENT ABSTRACTS OF JAPAN vol. 17, no. 364 (C-1081) 9. Juli 1993 & JP-A-05 057 116 (ICHIKAWA WOOLEN TEXTILE CO.) 9. März 1993

## Beschreibung

Die Erfindung betrifft ein Filtermittel für die Oberflächenfiltration, mit einer Trägermaterialbahn, bestehend aus einem Fadengebilde oder einem Spindfaservlies, sowie mit einer Faserschicht, die aus einer Grobfaserschicht und einer außenseitigen Feinfaserschicht gebildet ist, welche miteinander vernadelt sind.

Bei der Oberflächenfiltration ist man bemüht, die staubförmigen Verunreinigungen eines zu reinigenden Rohgases auf der anströmseitigen Oberfläche des Filtermittels möglichst vollständig abzuscheiden. Hierdurch bildet sich eine durchaus erwünschte Hilfsschicht, die die Filtration unterstützt. Die Poren im Inneren des Filtermittels bleiben offen, so daß sich für den Filterwiderstand und den Druckverlust günstigere Werte ergeben als bei der Tiefenfiltration. Hinzu kommt, daß sich die im Betrieb aufbauende Hilfsschicht auf einfache Weise und gründlich entfernen läßt.

Für die Erzielung einer Oberflächenfiltration sind Filtermittel bekannt, die im wesentlichen dreischichtig aufgebaut sind (JP-A-05 057 116). Zur Aufnahme der im Betrieb auf das Filtermittel einwirkenden Kräfte ist eine Trägermaterialbahn vorgesehen, die aus einem Gewebe, Gewirke, Fadengelege oder einem Spindfaservlies besteht. Auf diese Trägermaterialbahn wird eine Grobfaserschicht aufgenadelt, die aus mehreren, nacheinander aufgenadelten Grobfaservliesen aufgebaut wird. Die Vernadelung bewirkt eine mechanische Verbindung mit der Trägermaterialbahn.

Um eine insbesondere die Abreinigung begünstigende feinporige und glatte Oberfläche zu erreichen, ist auf die für die Anströmung bestimmte Seite des Filtermittels eine Feinfaserschicht mit einer Faserfeinheit von 1,1 - 3,3 dtex aufgenadelt. Auch diese Feinfaserschicht kann aus mehreren, durch Nadelung verdichtete Feinfaservliesen aufgebaut sein. Durch die Vernadelung mit der Grobfaserschicht wird eine feste mechanische Verbindung erzielt.

Aufgrund strengerer Umweltvorschriften haben sich die Anforderungen an die Abscheidung von Stäuben aus Rohgasen, insbesondere aus Abgasen, erheblich verschärft. Mit dem vorbeschriebenen Filtermittelaufbau konnten diese Anforderungen nicht in allen Fällen erfüllt werden. Für höchste Anforderungen ging man deshalb von der Aufnadelung einer Feinfaserschicht ab und verwendete stattdessen offenporige Filterschäume, die auf die Grobfaserschicht aufgebracht oder in diese eingelagert wurden (EP-A-0 248 182). Auch dieser Filteraufbau bewährte sich nicht in allen Fällen, da die Schaumbeschichtung die Neigung hat, sich im Inneren zuzusetzen.

Der Erfindung liegt die Aufgabe zugrunde, ein Filtermittel so zu gestalten, daß die Abscheideleistung unter möglichst weitgehender Beibehaltung der Oberflächenfiltration verbessert wird.

Diese Aufgabe wird erfindungsgemäß dadurch gelöst, daß die Feinfaserschicht im wesentlichen aus Mikrofasern besteht und daß die Außenseite der Feinfaserschicht mit einer porösen Kunststoffbeschichtung versehen ist. Die Erfindung beruht also auf dem Grundgedanken, wieder zu einer zweigeteilten Faserschicht zurückzukehren, für die Feinfaserschicht jedoch Mikrofasern zu verwenden. Dabei versteht man unter Mikrofasern solche Fasern, deren Faserdurchmesser bei anorganischen Fasern kleiner oder gleich 10µm beträgt, bei organischen Fasern einem Titer von kleiner oder gleich 1 dtex entspricht.

Im Stand der Technik ist zwar die Verwendung von Mikrofasern auch im Filterbereich bekannt (EP-A-0 403 840, DE-A-41 08 937; EP-A-0 466 381). Aus diesem Dokumenten ergibt sich jedoch, daR Mikrofasern nur im Gemisch mit Grobfasern verarbeitet worden sind. Zwar ist es auch bekannt, Mikrofaserschichten, die vollständig aus Mikrofasern bestehen, auf Grobfaserschichten aufzubringen. Für die Verbindung beider Schichten wurden jedoch besondere Maßnahmen getroffen. So ist bei dem für Bekleidungszwecke bestimmten Verbundvliesmaterial nach der DE-A-23 56 720 eine Schmelzprägung vorgesehen worden. Bei dem Filtermittel nach der EP-A-0 375 234 sind Electret-Mikrofasern verwendet worden. Schließlich ist in der DE-A-36 02 154 vorgeschlagen worden, die Mikrofaserschicht mit Metallfasern zu umwickeln, um dem Filtermittel hinreichend Halt zu geben.

Überraschenderweise hat sich gezeigt, daß sich die von der Fachwelt für notwendig gehaltenen Maßnahmen zur Verfestigung und Verbindung von Mikrofaserschichten, wie sie sich aus den vorzitierten Dokumenten ergeben, durch einen an sich bekannten Vernadelungsprozeß ersetzen lassen, d.h. daß man auch einer aus Mikrofasern bestehenden Feinfaserschicht durch Vernadelung eine hinreichende innere Festigkeit geben und daß man durch einen weiteren Vernadelungsprozeß eine sichere Verbindung zwischen Fein- und Grobfaserschicht erzielen kann. Auf diese Weise wird ein Filtermittel zur Verfügung gestellt, das einerseits wegen der vorhandenen Trägermaterialbahn hohen Festigkeitsanforderungen gerecht wird, sich andererseits aber auch durch überlegene Filtereigenschaften auszeichnet. Die aus Mikrofasern bestehende Feinfaserschicht bildet auf der Anströmseite eine Oberfläche, die sich durch relativ große Fläche und feine Poren auszeichnet. Dies führt zu einer nahezu vollständigen Abscheidung von Stäuben an der Oberfläche. Da diese Oberfläche zudem sehr glatt ist, läßt sich der abgeschiedene Staub auf einfache Weise praktisch vollständig abreinigen. Dabei besticht das erfindungsgemäße Filtermittel durch gleichmäßige Eigenschaften über die Fläche, da keine Störungen des Faseraufbaus aufgrund besonderer, örtlich begrenzter Maßnahmen zur Verfestigung und Verbindung der Fasern vorhanden sind.

Die Feinfaserschicht sollte ein Flächengewicht haben, das mindestens 10% des Flächengewichts der Grobfaserschicht beträgt, damit eventuelle Unebenheiten der Grobfaserschicht durch die Feinfaserschicht kompensiert werden. In der Regel reicht es aus, wenn die Feinfaserschicht ein Flächengewicht hat, das höchstens 33% des Flächengewichts der Grobfaserschicht beträgt, vorzugsweise 20-25%.

In weiterer Ausgestaltung der Erfindung ist vorgesehen, daß die Feinfaserschicht vorvernadelt ist, also zunächst ein durch Vernadelung verfestigtes Feinfaservlies hergestellt, auf die Grobfaserschicht aufgebracht und dann mit ihr vernadelt wird. Die Vorvernadelung drückt sich auch und insbesondere in einer gleichmäßigen und dichten Verteilung der Mikrofasern am Endprodukt aus.

Zur Erzielung der erfindungsgemäßen Wirkungen sollte die Feinfaserschicht zu 100% aus Mikrofasern bestehen. Im wesentlichen werden diese Wirkungen aber auch dann erzielt, wenn die Feinfaserschicht zu einem geringen Anteil - bis zu 10% - andere Fasern enthält. So können in der Feinfaserschicht - wie auch in der Grobfaserschicht - Fasern vorhanden sein, die elektrisch leitend und/oder katalytisch und/oder adsorptiv wirksam sind. Auch können metallische Fasern in der Faserschicht vorhanden sein. Als Metalle kommen insbesondere Edelstahl, Kupfer, Silber oder auch Nickel in Frage.

Als Material für die Mikrofasern sind in erster Linie organische Polymere vorgesehen und hier insbesondere Polyacrylnitril, Polyphenylensulfid, Polyimid, Polytetrafluorethylen oder Polymetaphenylendiaminoisophtalat. Auch andere organische Fasern kommen in Frage, soweit sie sich vernadeln lassen. Dies schließt jedoch nicht aus, daß auch anorganische Fasern oder auch Kohlenstoffasern oder Mischungen von organischen und anorganischen Fasern zum Einsatz kommen können.

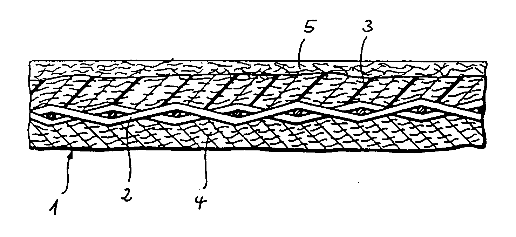

In der Zeichnung ist die Erfindung anhand eines im Querschnitt dargestellten Ausführungsbeispiels näher veranschaulicht. Sie zeigt ein Filtermittel (1), in dessen Innerem sich ein Trägergewebe (2) erstreckt, das im wesentlichen der Aufnahme von auf das Filtermittel (1) einwirkenden Kräften dient. Auf beiden Seiten des Trägergewebes (2) ist je eine Grobfaserschicht (3, 4) aufgenadelt. Die Ausbildung der einzelnen Fasern und deren Dichte ist den jeweiligen Anforderungen angepaßt.

Auf die obere Grobfaserschicht (3) ist eine Feinfaserschicht (5) aufgenadelt, deren Dicke erheblich geringer ist als die der Grobfaserschichten (3, 4). Die Feinfaserschicht (5) besteht aus sogenannten Mikrofasern, also Fasern mit einem Faserdurchmesser, der kleiner oder gleich 10µm ist.

Die Anordnung des Trägergewebes (2) kann von dem gezeigten Beispiel je nach Anforderung abweichen. So liegt es im Rahmen der Erfindung, nur an der Oberseite des Trägergewebes (2) eine Grobfaserschicht (3) anzuordnen oder aber auch eine Grobfaserschicht (4) nur an der Unterseite aufzunadeln und die Feinfaserschicht auf die Oberseite des Trägergewebes (2) ohne Zwischenschaltung einer weiteren Grobfaserschicht aufzunadeln.

## Patentansprüche

1. Filtermittel für die Oberflächenfiltration, mit einer Trägermaterialbahn, bestehend aus einem Fadengebilde oder einem Spinnfaservlies, sowie mit einer Faserschicht, die aus einer Grobfaserschicht (3,4) und einer außenseitigen Feinfaserschicht (5) gebildet ist, welche miteinander vernadelt sind,
dadurch gekennzeichnet, daß die Feinfaserschicht (5) im wesentlichen aus Mikrofasern, die im Falle von anorganischen Fasern Faserdurchmesser kleiner oder gleich 10̸ µm aufweisen und im Falle von organischen Fasern Titer kleiner oder gleich 1 dtex haben, besteht und daß die Außenseite der Feinfaserschicht (5) mit einer porösen Kunststoffbeschichtung versehen ist.

2. Filtermittel nach Anspruch 1,
dadurch gekennzeichnet, daß die Feinfaserschicht (5) ein Flächengewicht hat, das mindestens 10̸% des Flächengewichts der Grobfaserschicht (3, 4) beträgt.

3. Filtermittel nach Anspruch 1 oder 2,
dadurch gekennzeichnet, daß die Feinfaserschicht (5) ein Flächengewicht hat, das höchstens 33% des Flächengewichts der Grobfaserschicht beträgt.

4. Filtermittel nach einem der Ansprüche 1 bis 3,
dadurch gekennzeichnet, daß wenigstens die Feinfaserschicht (5) Fasern enthält, die elektrisch leitend und/oder katalytisch und/oder absorptiv wirksam sind.

5. Filtermittel nach einem der Ansprüche 1 bis 4,
dadurch gekennzeichnet, daß wenigstens die Feinfaserschicht (5) metallische Fasern enthält.

6. Filtermittel nach einem der Ansprüche 1 bis 5,
dadurch gekennzeichnet, daß die Feinfaserschicht (5) organische Fasern enthält oder daraus besteht.

## Claims

1. Filter means for surface filtration, with a web of carrier material, consisting of a thread structure or of a spun-bonded fabric, and with a fibre layer formed from a coarse-fibre layer (3, 4) and from an outer fine-fibre layer (5) which are interneedled, characterized in that the fine-fibre layer (5) consists essentially of microfibres which, in the case of inorganic fibres, have a fibre diameter smaller than or equal to 10 µm and, in the case of organic fibres, have a linear density smaller than or equal to 1 dtex, and in that the outside of the fine-fibre layer (5) is provided with a porous plastic coating.

2. Filter means according to Claim 1, characterized in that the fine-fibre layer (5) has a weight per unit area which amounts to at least 10% of the weight per unit area of the coarse-fibre layer (3, 4).

3. Filter means according to Claim 1 or 2, characterized in that the fine-fibre layer (5) has a weight per unit area which amounts to at most 33% of the weight per unit area of the coarse-fibre layer.

4. Filter means according to one of Claims 1 to 3, characterized in that at least the fine-fibre layer (5) contains fibres which are electrically conductive and/or have a catalytic and/or absorbant effect.

5. Filter means according to one of Claims 1 to 4, characterized in that at least the fine-fibre layer (5) contains metallic fibres.

6. Filter means according to one of Claims 1 to 5, characterized in that the fine-fibre layer (5) contains organic fibres or consists of these.

## Revendications

1. Matière filtrante pour la filtration par surface, avec une bande de matériau support, constituée d'une structure filamentaire ou d'un matelas de fibres de filature ainsi qu'avec une couche de fibres constituée d'une couche de fibres grossières (3,4) et d'une couche de fibres fines (5) en face extérieure, ces couches étant aiguilletées ensemble, caractérisé en ce que la couche de fibre fines (5) est constituée essentiellement de microfibres qui, dans le cas de fibres anorganiques, ont un diamètre de fibre inférieur ou égal à 10 µm, et, dans le cas de fibres organiques, ont un titre inférieur ou égal à 1 dtex, et en ce que la face extérieure de la couche de fibres fines (5) est pourvue d'un revêtement synthétique poreux.

2. Matière filtrante selon la revendication 1, caractérisé en ce que la couche de fibres fines (5) a un poids surfacique d'au moins 10 % du poids surfacique de la couche de fibres grossières (3,4).

3. Matière filtrante selon la revendication 1 ou 2, caractérisé en ce que la couche de fibres fines (5) a un poids surfacique d'au plus 33 % du poids surfacique de la couche de fibres grossières.

4. Matière filtrante selon l'une des revendications 1 à 3, caractérisé en ce qu'au moins la couche de fibres fines (5) contient des fibres qui sont conductrices de l'électricité et/ou ont une action catalytique et/ou absorbante.

5. Matière filtrante selon l'une des revendications 1 à 4, caractérisé en ce qu'au moins la couche de matière de fibres fines (5) contient des fibres métalliques.

6. Matière filtrante selon l'une des revendications 1 à 5, caractérisé en ce que la couche de fibres fines (5) contient des fibres organiques ou en est constituée.
